# EUROPEAN PATENT APPLICATION

(11) **EP 1 493 932 A1**
(43) Date of publication of application: **05.01.2005**
(21) Application number: 04076837.6
(22) Date of filing: 24.06.2004
(51) Int. Cl.: F16B 21/07, F16B 21/08, F16B 5/06

(54) **Snap-action fixing element**

(30) Priority: 02.07.2003 SE 0301972
(71) Applicant: ITW Fixfast AB, 431 53 Mölndal (SE)
(72) Inventor: Östergren, Kristian, 441 65 Alingsas (SE)
(74) Representative: Romare, Laila Anette

(57) **Abstract**

Snap-action fixing element (1) comprising a first (2) and a second (3) part that can be joined together and separated, where the first part (2) has a first means (4) for attachment to a first substrate and a cavity (7) and the second part (3) has a second means (9) for attachment to a second substrate and a projecting section (14) for insertion and snap-fixing in the cavity (7) of the first part, with the first part (2) being made of an elastic material.

## Description

### TECHNICAL FIELD

The invention relates to a snap-action fixing element comprising a first and a second part that can be joined together and separated, with the first part having a first means for attachment to a first substrate and a cavity and the second part having a second means for attachment to a second substrate and a projecting section for insertion and snap-fixing in the cavity of the first part.

### BACKGROUND ART

For joining items, for example for attaching various types of panels in vehicles, screwed connections have traditionally been used. However, screwed connections have a number of disadvantages. The head of the screw is visible after attachment and must be concealed in some way or else it must be accepted that the installation has a less aesthetic appearance. In addition, the assembly of a screwed connection is time-consuming. The assembly must be carried out manually, for which reason the use of screwed connections in a manufacturing process is an obstacle to automating the process.

With increasing interest in shortening assembly times and automating the assembly, alternatives to screwed connections have therefore been sought. Snap-action fixing elements have been used for certain applications. Snap-action fixing elements are usually made of a plastic material with a male and a female part that fit together with a snap-action, each having a means for attachment to a panel and to a part of a vehicle respectively. The use of snap-action fixing elements solves the above problems concerning appearance and shortening of assembly times.

Panels in vehicles are, however, parts that must often be assembled and disassembled a number of times, for example for later installation of components such as loudspeakers, central locking and the like. With repeated assembly and disassembly, snap-action fixing elements have a tendency to break.

The problem thus remains to be solved of achieving a snap-action fixing element that can be assembled and disassembled a plurality of times.

### DISCLOSURE OF INVENTION

The above problems are solved by means of the invention by making the first part of the fixing element of an elastic material. By an elastic material is meant here a material that regains its form after deformation, that is to say is deformed elastically. A measurement of elasticity is the degree of hardness of a material. An elastic material which is suitable for manufacturing the first part suitably has a hardness less than 80 Shore measured with a type D durometer according to the measurement method ISO 868.

According to a preferred embodiment of the invention, the first part can be elongated by more than 2 mm before it separates from the second part.

According to another preferred embodiment of the invention, the fixing element can be subjected to a tensile force of more than 160 N before the first part separates from the second part.

According to an embodiment of the invention, the first part has a flange surrounding the cavity, whereby a seal is obtained around the attachment to the second substrate when the snap-action fixing element is joined together. The flange means that the attachment of the snap-action connection is watertight. As the flange is made of an elastic material, it takes its shape according to the base and forms a good seal. This is important, for example, in assembling door panels to vehicle doors, as water runs over the external parts of the vehicle door, while moisture-sensitive components such as electronics are arranged in the space between the panel and the vehicle door.

According to another embodiment, the second part has a flange surrounding the projecting section. Preferably, both the first part and the second part have flanges.

In order to facilitate the attachment of the fixing element to a substrate, the attachment means on the first part can have two outer sections with circular cross-sections and an intermediate middle section with a smaller cross-section than the cross-section of the outer sections.

### BRIEF DESCRIPTION OF DRAWINGS

Figure 1 shows a snap-action fixing element according to an embodiment of the invention in its joined-together configuration, in a perspective view.
Figure 2 shows the first part of the snap-action fixing element viewed transversally.
Figure 3 shows the first part viewed axially from the side which, upon attachment, is intended to be attached to a substrate.
Figure 4 shows the first part viewed axially from the side which, upon attachment, is intended to be attached to the second part of the fixing element.
Figure 5 shows a cross-section along the line V-V of the first part as shown in Figure 2.
Figure 6 shows the second part of the snap-action fixing element viewed transversally.
Figure 7 shows the second part of the snap-action fixing element viewed transversally and rotated through 90° in relation to Figure 6.
Figure 8 shows a cross-section of Figure 6 along the line VIII-VIII.
Figure 9 shows the second part viewed axially from the side which, upon attachment, is intended to be attached to the substrate.
Figure 10 shows a cross-section of Figure 6 along the line X-X.
Figure 11 shows a diagram of the tensile-elongation test for the fixing element according to the invention.

### MODE(S) FOR CARRYING OUT THE INVENTION

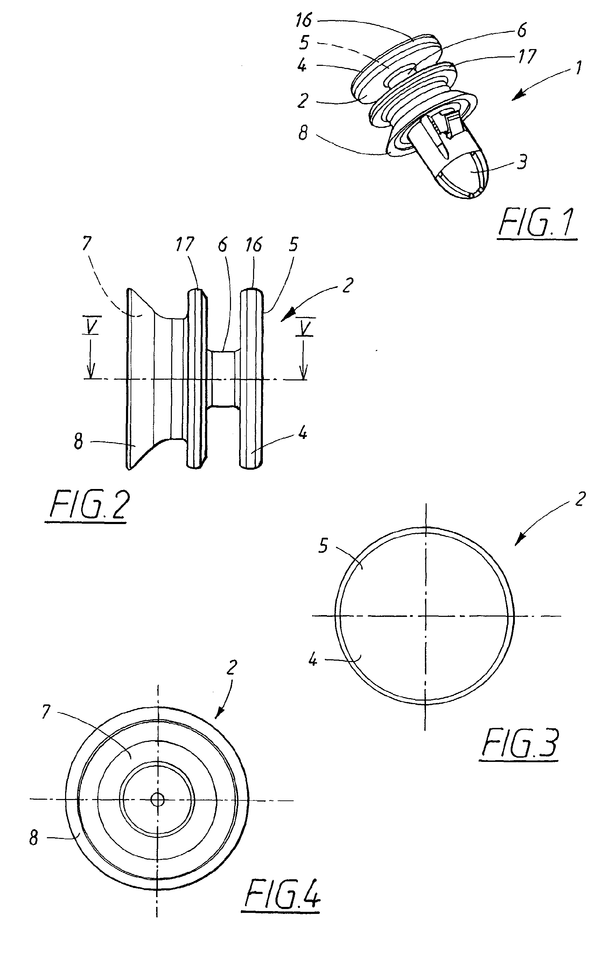

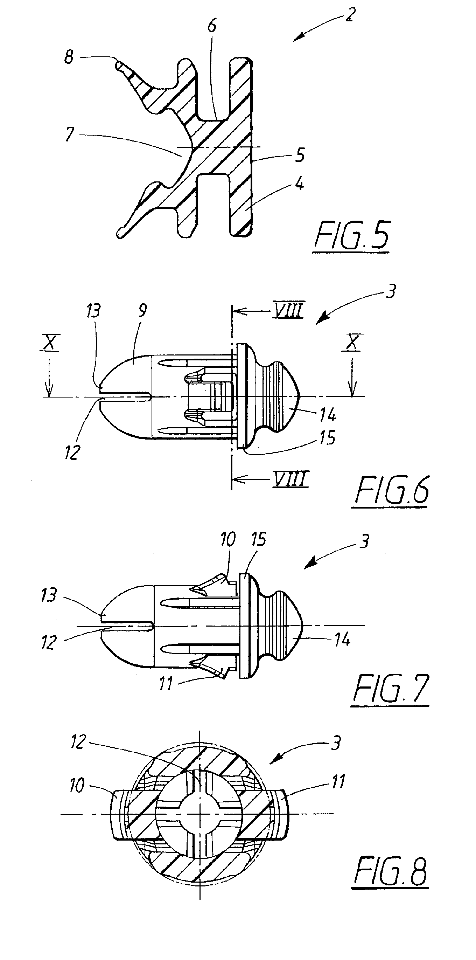

Figure 1 shows the snap-action fixing element 1 with the first 2 and the second 3 parts joined together. Figure 2 shows the first part 2 viewed from one side. The part 2 has a first means 4 for attachment to a substrate, such as a panel or vehicle door. The part 2 has a cavity or cup 7 for joining together with the second part 3. Figure 3 shows the first part 2 viewed axially from the means 4. The means 4 has a circular cross-section in the embodiment shown, but can also be other shapes. Figure 2 shows that the means has a section 16 with a larger cross-section towards its outer end 5 and a smaller cross-section, a middle section 6 inside. Inside the middle section 6 and adjacent to the cup 7, the means 4 has, in addition, a wider section 17 with a circular cross-section. These two saucer-shaped sections 16, 17 and the middle section 6 constitute the attachment means 4. They are designed so that the middle section 6 fits into a corresponding slot on the substrate. Figure 4 shows the first part 2 viewed axially, from the opposite side of the part 2. Surrounding the cavity 7 is a flange 8, which is intended, upon attachment, to make contact with a substrate and provide a seal against the ingress of moisture. Figure 5 shows an axial section along the line V-V of the part 2 as shown in Figure 2. The first part 2 is manufactured in an elastic material, for example Hydrel from DuPont. The material in the first part 2 has, for example, a hardness of 63 Shore measured with a type D durometer using the method ISO 868. Other degrees of hardness are possible. The said degree of hardness is only a suitable example.

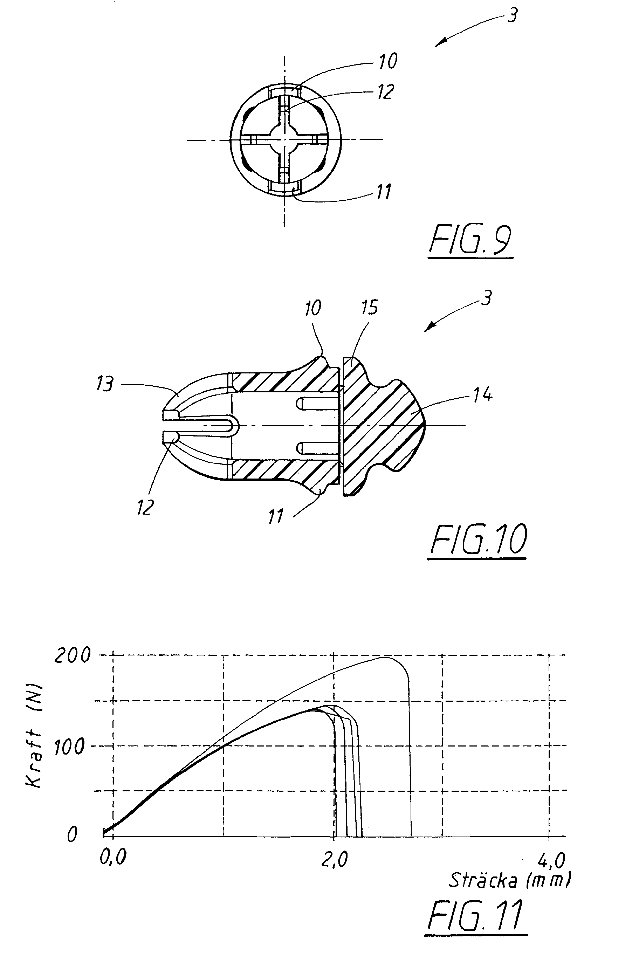

Figure 6 shows the second part 3 of the fixing element 1 viewed from one side. The part 3 has a second means 9 for attachment to a substrate, such as a panel or a vehicle door. Figure 7 shows the second part 3 turned inwards through 90°. Figure 7 shows that the second means 9 is provided with two sprung projections 10, 11, which are designed to anchor the fixing element 1 in the substrate. The means 9 has, in addition, four slots 12 in its outer end 13, which slots facilitate the insertion of the fixing element by making the outer end 13 more compressible. The number of slots can be varied. Figure 8 shows the second part 3 viewed in cross-section. The part 3 has at this end a projecting conical section 14, which is intended to be inserted in the correspondingly-shaped cavity 7 on the first part 2. The second part 3 has a flange 15 arranged peripherally around the projecting section 14. Figure 10 shows the second part 3 viewed axially, from the opposite end in comparison to Figure 9, that is to say the end which, upon attachment, is intended to be attached to a substrate. Figure 10 shows a cross section along the line X-X in Figure 6. The second part 3 is made of an inelastic material, for example POM plastic.

Figure 11 illustrates the assembly and disassembly test that was carried out on the fixing element according to the invention. The X axis shows the elongation in millimetres and the Y axis shows the tensile force to which the fixing element has been subjected. Both parts 2, 3 of the fixing element have been joined together and their outer ends 5, 13 have been clamped in the measuring instrument. The diagram shows how much the fixing element, in practice its elastic first part 2, has been elongated before the parts 2, 3 have separated. The different graphs show different repetitions of the test with the same fixing element. The number of cycles with the same fixing element was five. The interval between the cycles was 15 seconds. The tensile test was carried out at a speed of 100 mm/minute. The force that has been required to separate the parts 2, 3 is in the range 180 to 200 N. The elongation before separation is in the range 2.5 to 2.8 mm.

## Claims

1. Snap-action fixing element (1) comprising a first (2) and a second (3) part that can be joined together and separated, with the first part (2) having a first means (4) for attachment to a first substrate and a cavity (7) and the second part (3) having a second means (9) for attachment to a second substrate and a projecting section (14) for insertion and snap-fixing in the cavity (7) of the first part, **characterized in that** the first part (2) is made of an elastic material.

2. Snap-action fixing element (1) according to Claim 1, **characterized in that** the second part (3) is made of an inelastic material.

3. Snap-action fixing element (1) according to Claim 1, **characterized in that** the first part (2) can be elongated by more than 2 mm before it separates from the second part (3).

4. Snap-action fixing element (1) according to any one of the above claims, **characterized in that** it can be subjected to a tensile force of more than 160 N before the first part (2) separates from the second part (3).

5. Snap-action fixing element (1) according to any one of the above claims, **characterized in that** the first part (2) has a flange (8) surrounding the cavity (7), whereby a seal is obtained around the attachment to the second substrate when the snap-action fixing element (1) is joined together.

6. Snap-action fixing element according to any one of the above claims, **characterized in that** the second part (3) has a flange (15) surrounding the projecting section (14).

7. Snap-action fixing element according to any one of the above claims, **characterized in that** the attachment means (4) on the first part (2) has two outer sections with circular cross-sections and an intermediate middle section (6) with a smaller cross-section than the cross-section of the outer sections for insertion into a slot in the substrate.
